Europäisches Patentamt

European Patent Office

Office européen des brevets

(11) Veröffentlichungsnummer: **0 122 253**
**B1**

(12) # EUROPÄISCHE PATENTSCHRIFT

(45) Veröffentlichungstag der Patentschrift:
13.08.86

(21) Anmeldenummer: 84890064.3

(22) Anmeldetag: 03.04.84

(51) Int. Cl.⁴: **B 60 R 13/08,** B 60 K 13/04,
B 60 K 11/08

(54) **Kraftfahrzeug.**

(30) Priorität: 06.04.83 AT 1266/83

(43) Veröffentlichungstag der Anmeldung:
17.10.84 Patentblatt 84/42

(45) Bekanntmachung des Hinweises auf die Patenterteilung:
13.08.86 Patentblatt 86/33

(84) Benannte Vertragsstaaten:
DE FR

(56) Entgegenhaltungen:
DE-A-3 225 347
DE-C-841 830
FR-A-2 281 495
FR-A-2 314 068
FR-A-2 331 111
FR-A-2 364 779
GB-A-2 002 850

(73) Patentinhaber: AVL GESELLSCHAFT FÜR
VERBRENNUNGSKRAFTMASCHINEN UND
MESSTECHNIK MBH.PROF.DR.DR.H.C.HANS
LIST, Kleiststrasse 48, A-8020 Graz (AT)

(72) Erfinder: Kirchweger, Karl, Stiftingtalstrasse 71,
A-8010 Graz (AT)

(74) Vertreter: Krause, Walter, Dr. Dipl.- Ing., Postfach
200 Singerstrasse 8, A-1014 Wien (AT)

EP 0 122 253 B1

LIBER, STOCKHOLM 1986

## Beschreibung

Die Erfindung betrifft ein Kraftfahrzeug mit einer zum Antrieb desselben dienenden, in einem Motorraum angeordneten Brennkraftmaschine, wobei der Motorraum durch zusätzliche, gegenüber Rahmen- bzw. Karosserieteilen abgedichtete Schalenteile zu einer schalldämmenden Kapsel vervollständigt ist, welche schalldämpfende Zu- und Ableitungsöffnungen für die Kapselbelüftung aufweist, von denen zumindest eine im Bereich der vom Auspuffsystem der Brennkraftmaschine aufsteigenden erhitzten Luft angeordnet ist, und mit einer innerhalb der Kapsel angeordneten separaten Auspuffverschalung zusammenarbeit. Ein derartiges Kraftfahrzeug ist in beispielsweise DE-A-2 835 032 offenbart.

An Brennkraftmaschinen und insbesonders an solche die zum Antrieb von auf öffentlichen Verkehrsflächen zugelassenen Kraftfahrzeugen dienen, werden heute ständig steigende Anforderungen hinsichtlich bestimmter einzuhaltender Grenzwerte der auftretenden Schallabstrahlung gestellt. Die in diesem Zussmmenhang bekannten Maßnahmen reichen von einer teilweisen Beschichtung mit schalldämmenden Materialien über die Abkoppelung einzelner nicht kraftführender Bauteile von der körperschallerregten Grundstruktur der Brennkraftmaschine bis zu Dollständigen Kapseln, die die Brennkraftmaschine und teilweise auch Zusatzaggregate derselben umgeben und so die Schallabstrahlung von der Brennkraftmaschine verringern.

Aufgrund der relativ starken Erwärmung einer in Betrieb befindlichen Brennkraftmaschine muß bei derartigen geschlossenen Kapseln - auch wenn sie wassergekühlte Brennkraftmaschinen umgeben - für eine Belüftung des zwischen der Oberfläche der Brennkraftmaschine und der Kapselwand verbleibenden Raumes gesorgt werden, damit die Überhitzung von empfindlichen Bauteilen, wie beispielsweise der Lichtmaschine, vermieden werden kann. Derartige Bauteile könnten zwar prinzipiell auch außerhalb der Kapsel angeordnet werden, wobei sich aber dann Probleme bezüglich des Antriebes bzw. der Durchführung von erforderlichen Anschlüssen durch die Kapsel ergeben.

In diesem Zusammenhang ist besonderes Augenmerk auf das Auspuffsystem der Brennkraftmaschine zu richten, welches zumindest im zylinderkopfnahen Bereich nicht nur eine außerordentlich starke Schallquelle sondern auch einen der heißesten Bauteile der Brennkraftmaschine darstellt, wobei die auftretenden Temperaturen derart hoch sind, daß auch nach dem Abstellen der Brennkraftmaschine dafür gesorgt sein muß, daß die vom Auspuffsystem erhitzte Luft aus der Kapsel abgeführt werden kann. Um dies zu ermöglichen sind nun die verschiedensten Anordnungen bekannt geworden:

So zeigt beispielsweise die DE-A-28 35 032 eine gekapselte Brennkraftmaschine, bei der an der Seite des Auspuffsystems eine eigene schalldämmende Teilkapsel auf die Kapsel der Brennkraftmaschine aufgesetzt ist, welche über im wesentlichen ringförmige Spalte um die einzelnen Auspuffkrümmer mit dem Innenraum der Verschalung der Brennkraftmaschine in Verbindung steht. Über diese ringförmigen Spalte wird im Betrieb der Brennkraftmaschine von einem für die Kapselbelüftung vorgesehenen Lüftergebläse Kühlluft in die Auspuffverschalung gefördert, welche an einem Absorptionsschalldämpfer um das von der Brennkraftmaschine wegführende Sammelrohr aus dieser separaten Verschalung austritt. Die beim Abstellen der Brennkraftmaschine an den heißen Teilen des Auspuffsystems erwärmte und aufsteigende Luft kann an der Oberseite der Auspuffverschalung entweder über Absorptionsschalldämpfer oder eine beim Abstellen der Brennkraftmaschine betätigbare Klappenanordnung entweichen. Eine derartige Anordnung benötigt relativ viel Platz, ist konstruktiv aufwendig und daher für den Einbau der Brennkraftmaschine in einem Fahrzeug wenig geeignet.

In der DE-A-32 25 347 ist die Anordnung von schalldämmend gekapselten Brennkraftmaschinen als Antriebsmotor in Kraftfahrzeugen behandelt, wobei dort innerhalb der geschlossenen und teilweise durch Fahrzeugteile ergänzten schalldämmenden Kapsel eine eigene ebenfalls geschlossene Auspuffverschalung vorgesehen ist, welche unmittelbar am Zylinderkopf der Brennkraftmaschine befestigt ist. Diese geschlossene Auspuffverschalung wird, da ihre zuluftnahen Teile von der heute üblichen PKW-Konzeption her geometrisch hoch und der Austritt des Auspuffsystems aus der Kapsel geometrisch tief liegen, im Betrieb des Motors und somit des Kühlgebläses von oben nach unten von Kühlluft durchströmt.

Nach Abstellen des Kühlgebläses entsteht dabei aber sofort die Tendenz, daß sich die Strömungsrichtung umkehrt und die erhitzte Luft bei allen sich bietenden Gelegenheiten aus der Auspuffverschalung steigt und das Kapselinnere überhitzt.

Dies bedingt, daß die Kühllufteintrittsöffnungen nicht an den höchstgelegenen Stellen sein dürfen, was die Gefahr von Totwassergebieten im Kühlungsstrom bringt, und erfordert eine sehr gute Abdichtung der geschlossenen Auspuffverschalung gegenüber dem Innenraum der schalldämmenden Kapsel, sowie auch eine relativ komplizierte konstruktive Ausführung der das Auspuffsystem relativ eng umgebenden Auspuffverschalung, was insbesonders auch für die Montage und Wartung nachteilig ist. Dies gilt besonders dann, wenn - wie bei modernen Brennkraftmaschinen von größerer Leistung häufig der Fall - Abgasturbolader bzw. Einrichtungen zur Abgasrückführung vorgesehen sind.

Aufgabe der vorliegenden Erfindung ist es, die bei den bekannten Kraftfahrzeugen der genannten Art auftretenden Nachteile insbesonders im Hinblick auf die komplizierte Ausgestaltung der Auspuffverschalung zu vermeiden und ein derartiges Kraftfshrzeug so zu verbessern, daß auf konstruktiv einfache und montage- bzw. wartungsfreundliche Art die Kühlung bzw. Belüftung der Kapsel sowie des Auspuffsystems der Brennkraftmaschine sowohl während des Betriebes der Brennkraftmaschine als auch nach deren Abstellen sichergestellt ist.

Dies wird gemäß der Erfindung bei einem Kraftfahrzeug der genannten Art dadurch erreicht, daß die Auspuffverschalung als eine zumindest die zylinderkopfnahen Teile des Auspuffsystems dachartig bedeckende, nach unten offene Abdeckung ausgebildet ist und daß die zugehörige Ableitungsöffnung unmittelbar an einer Außenwand des Fahrzeuges angeordnet ist. Es ist auf diese Weise also ermöglicht, daß die sowohl im Betrieb der Brennkraftmaschine als auch nach deren Abstellen am heißen Auspuffsystem erhitzte Luft, welche innerhalb der Kapsel naturgemäß aufsteigt, unmittelbar in die zumindest die zylinderkopfnahen Teile des Auspuffsystems überdeckende, nach unten offene dachartige Abdeckung eintritt und unmittelbar an einer Außenwand des Fahrzeuges über eine schallisolierte Ableitungsöffnung austreten kann. Soferne die Kapsel zwangsbelüftet ist - beispielsweise durch ein von der Brennkraftmaschine angetriebenes eigenes Gebläse - wird ein Teil der Kapselkühlluft auch durch die Ableitungsöffnung der Auspuffverschalung austreten, was die Kühlung des Bereiches des Auspuffsystems im Betrieb der Brennkraftmaschine verbessert. Soferne keine eigene Zwangsbelüftung der Kapsel vorgesehen ist, bzw. die Zufuhr von Kapselkühlluft nur durch die Wirkung des Staudruckes am sich bewegenden Fahrzeug erfolgt, kann die am heißen Auspuffsystem aufsteigende und durch die Ableitungsöffnung austretende Luft auch zum Nachfördern von Kapselkühlluft durch eine an relativ beliebiger Stelle anordenbare, schallisolierte Zuleitungsöffnung genutzt werden.

In weiterer Ausgestaltung der Erfindung kann die mit der Abdeckung des Auspuffsystems zusammenarbeitende Ableitungsöffnung in einem bei in Fahrt befindlichen Fahrzeug Unterdruck aufweisenden Bereich der Außenwand angeordnet sein, was die Abführung der am Auspuffsystem erhitzten Luft aus dem Bereich der Auspuffverschalung bzw. überhaupt aus dem Innenraum der Kapsel verbessert.

Nach einer weiteren vorteilhaften Ausgestaltung der Erfindung ist vorgesehen, daß die Abdeckung an der Brennkraftmaschine bzw. deren Auspuffsystem befestigt ist und einen Auslaßstutzen aufweist, der berührungslos und unter Freilassung eines im wesentlichen ringförmigen Spaltes in einen an der Fahrzeugaußenwand, vorzugsweise an der aufklappbaren Motorhaube, angeordneten Absorptionsschalldämpfer mündet, der mit der Ableitungsöffnung in Verbindung steht. Auf diese einfache Weise ist sichergestellt, daß die sich im Betrieb ebenfalls bis zu einem gewissen Grad erhitzende Auspuffverschalung keine Wärme und auch keinen Körperschall an die Fahrzeugaußenwand abgeben kann, wobei - insbesonders bei an der aufklappbaren Motorhaube angeordnetem Absorptionsschalldämpfer - die Zugänglichkeit zur Brennkraftmaschine sowie auch zum Auspuffsystem selbst verbessert ist.

Die Erfindung wird im folgenden anhand der in der Zeichnung dargestellten Ausführungsbeispiele näher erläutert.

Fig. 1 zeigt einen teilweisen Vertikalschnitt durch ein schematisch dargestelltes Kraftfahrzeug nach der Erfindung,

Fig. 2 einen teilweisen Schnitt entlang der Linie II-II in Fig. 1,

Fig. 3 eine Ansicht entlang des Pfeiles III in Fig. 1 bei abgenommener Motorhaube,

Fig. 4 eine der Fig. 3 entsprechende Ansicht bei geschlossener Motorhaube,

Fig. 5 zeigt ein anderes Ausführungsbeispiel der Erfindung in einer der Fig. 1 entsprechenden Darstellung,

Fig. 6 einen der Fig. 2 entsprechenden Schnitt durch das Ausführungsbeispiel nach Fig. 5,

Fig. 7 eine Ansicht entlang des Pfeiles VII in Fig. 5 bei weggelassener Brennkraftmaschine und

Fig. 8 zeigt eine der Fig. 7 entsprechende Ansicht (bei abgenommener Motorhaube) eines anderen Ausführungsbeispieles nach der Erfindung.

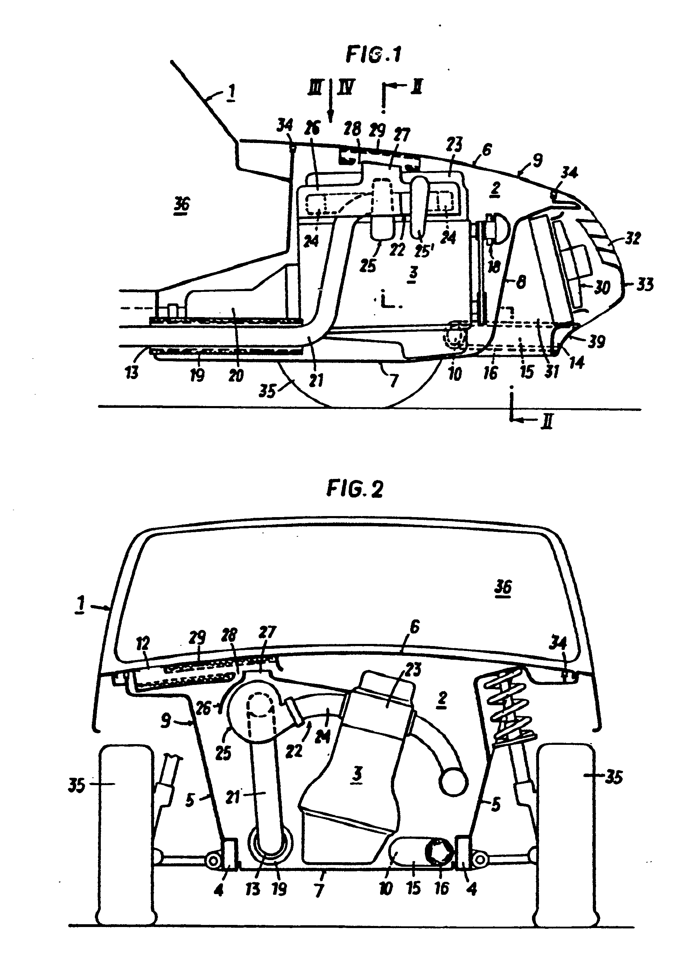

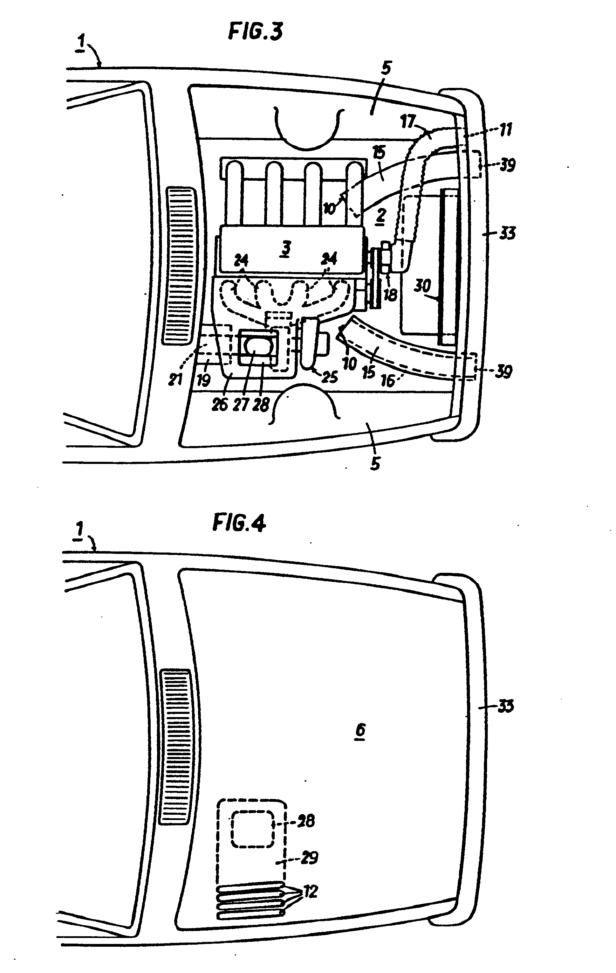

Das in den Fig. 1 bis 4 dargestellte Kraftfahrzeug 1 ist als Personenwagen ausgebildet und weist eine zum Antrieb desselben dienende, frontseitig in einem Motorraum 2 angeordnete Brennkraftmaschine 3 auf. Der Motorraum 2 ist durch zusätzliche, gegenüber Rahmen- bzw. Karosserieteilen - wie beispielsweise den Rahmenlängsholmen 4, den Radkastenabdeckungen 5 oder der Motorhaube 6 - abgedichtete Schalenteile - wie beispielsweise den Boden 7 und die vordere Stauwand 8 - zu einer geschlossenen schalldämmenden Kapsel 9 vervollständigt. Die Kapsel 9 weist Zuleitungsöffnungen 10, 11 sowie Ableitungsöffnungen 12, 13 auf, welche gegen Austritt von Luftschall isoliert sind und zur Belüftung der Kapsel dienen.

Die Zuleitungsöffnungen 10 sind im dargestellten Ausführungsbeispiel am kapselinnenseitigen Ende zweier vom vorderen Querträger 14 des Fahrzeuges 1 ausgehender gebogener Führungsrohre 15 angeordnet, deren querträgerseitige Enden bei in Fahrt befindlichem Fahrzeug dem Staudruck ausgesetzt sind. Eine schallabsorbierende Auskleidung 16 verhindert den Austritt von Luftschall aus der Kapsel 9, wobei die gebogene Ausführung der Führungsrohre 15 den direkten Schallaustritt unterbindet. Die Zuleitungsöffnung 11, die ebenfalls an einer dem Staudruck ausgesetzten Stelle der Vorderseite des Fahrzeuges 1 angeordnet ist, steht im dargestellten Ausführungsbeispiel über einen flexiblen Schlauch 17 mit einem von der Brennkraftmaschine 3 direkt angetriebenen Gebläse 18 in Verbindung, welches auch bei stillstehendem Kraftfahrzeug und laufender Brennkraftmaschine ausreichend Kühlluft in die Kapsel fördern kann.

Die Ableitungsöffnung 13 ist als ringförmiger und mit einem Absorptionsschalldämpfer 19 versehener Spalt um das neben dem Getriebe 20 aus der Kapsel 9 führende Auspuffsammelrohr 21 ausgebildet, wodurch der Durchtritt des Auspuffsammelrohres 21 durch die Kapsel berührungslos erfolgt. Im Bereich der vom Auspuffsystem 22 der Brennkraftmaschine 3 - welches im dargestellten Ausführungsbeispiel neben den am Zylinderkopf 23 angeflanschten Auspuffkrümmern 24 und dem Sammelrohr 21 noch einen Abgas-Turbolader 25 umfaßt - aufsteigenden, erhitzten Luft ist eine zumindest die zylinderkopfnahen Teile des Auspuffsystems 22 dachartig bedeckende, nach unten offene Abdeckung 28 als separate Auspuffverschalung angeordnet, welche in nicht dargestellter Weise an der Brennkraftmaschine 3 bzw. am Auspuffsystem 22 befestigt ist. Die Abdeckung 28 weist einen Auslaßstutzen 27 auf, der berührungslos und unter Freilassung eines im wesentlichen ringförmigen Spaltes 28 in einen an der aufklappbaren Motorhaube 6 angeordneten Absorptionsschalldämpfer 29 mündet, der mit der Ableitungsöffnung 12 in Verbindung steht. Diese Ableitungsöffnung 12 kann - wie im dargestellten Ausführungsbeispiel - in einem bei in Fahrt befindlichem Fahrzeug Unterdruck aufweisenden Bereich angeordnet sein, was einen Absaugeffekt über die Ableitungsöffnung 12 bzw. den angeschlossenen Absorptionsschalldämpfer 29 ergibt.

Auf weitere Bauteile des dargestellten Fahrzeuges, wie die frontseitig angeordnete Kühler-Lüfter-Gruppe 30, den Luftableitungsschacht 31, den Kühlergrill 32, die Stoßstange 33, die Dichtungen 34 der Motorhaube, die Räder 35 samt deren Aufhängung, den Fahrgastraum 38 usw., sei nur der Vollständigkeit halber verwiesen.

Bei stehendem Fahrzeug 1 erfolgt also die Belüftung des Motorraumes 2 bzw. des Innenraumes der schalldämmenden Kapsel 9 über das Gebläse 18, welches durch die Zuleitungsöffnung 11 Luft ansaugt und über die Ableitungsöffnungen 12, 13 ins Freie fördert. Bis zu einem gewissen Grad hilft dabei auch die vom erhitzten Auspuffsystem 22 aufsteigende und durch die Ableitungsöffnung 12 ins Freie strömende Luft mit, die Belüftung zu verbessern. Bei in Fahrt befindlichem Fahrzeug kommt zusätzlich noch der an den frontseitigen Einlaßöffnungen der Führungsrohre 15 wirkende Staudruck zur Geltung, der durch die Zuleitungsöffnungen 10 - die im Bereich von speziell zu kühlenden Teilen der Brennkraftmaschine, wie etwa der Ölwanne, der Kraftstoffpumpe, oder der Lichtmaschine, angeordnet sein können - Luft in die Kapsel fördert. Weiters wird durch die Anordnung der Ableitungsöffnung 12 in einem bei in Fahrt befindlichem Fahrzeug Unterdruck aufweisenden Bereich der Außenwand ein Absaugungseffekt erzielt, der die Kapselbelüftung ebenfalls verbessert.

Es ist also mit einfachen Mitteln eine ausreichende Belüftung des Innenraumes der schalldämmenden Kapsel sowohl bei stehendem als auch bei in Fahrt befindlichem Fahrzeug sichergestellt, wobei die dachartige Abdeckung 26 des Auspuffsystems einen wesentlich geringeren konstruktiven Aufwand sowie eine entscheidend einfachere Montage bzw. Wartung erlaubt als dies bei einer geschlossenen separaten Auspuffverschalung der Fall wäre.

Abweichend von der dargestellten, besprochenen Anordnung wäre es auch möglich, auf das Gebläse 18 zur Kapselbelüftung überhaupt zu verzichten, soferne dafür gesorgt wird, daß auch bei stehendem Kraftfahrzeug und in Betrieb befindlicher Brennkraftmaschine eine ausreichende Belüftung durch die in der Abdeckung 26 aufsteigende erhitzte Luft erfolgt.

Schließlich wäre noch darauf hinzuweisen, daß naturgemäß Bauteile wie der Kompressor 25' des Turboladers oder auch Regeleinrichtungen eines hier nicht dargestellten Abgasrückführsystems, die vor zu großer Hitzeeinwirkung geschützt werden sollen, außerhalb der dachartigen Abdeckung 26 liegend angeordnet werden müssen, was aber wegen der ohnedies nach unten offenen Ausbildung der Abdeckung keinerlei Schwierigkeiten bedeutet.

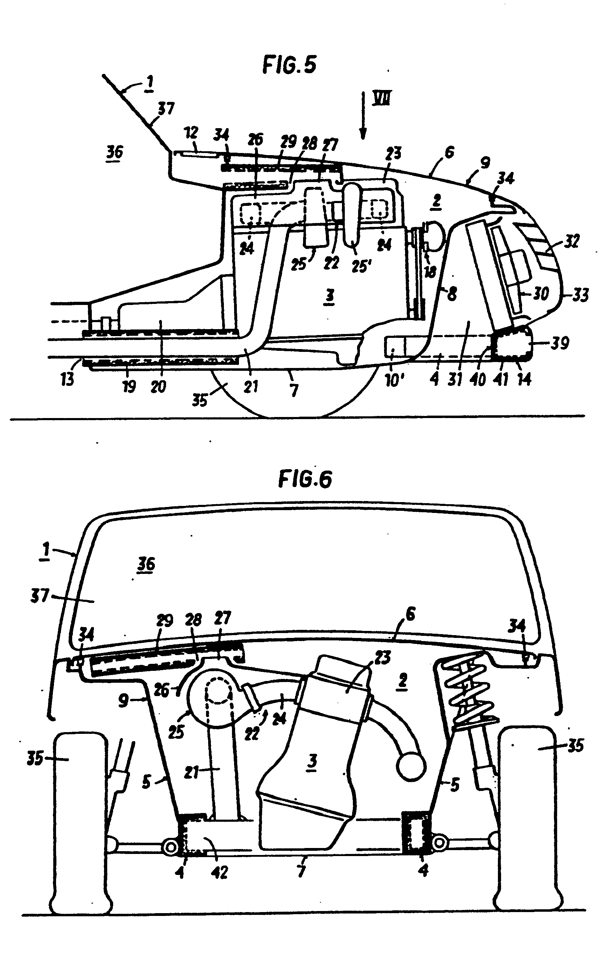

Das in den Fig. 5 bis 7 dargestellte Ausführungsbeispiel unterscheidet sich von dem nach den Fig. 1 bis 4 im wesentlichen nur in zweierlei Hinsicht:

Einerseits ist hier nun die Ableitungsöffnung 12 nicht auf der aufklappbaren Motorhaube 6 sondern im Bereich zwischen der Motorhaube 6 und der Windschutzscheibe 37 neben dem Einlaß 38 für die Belüftung des Fahrgastraumes 36 angeordnet, was aber lediglich eine andere Ausführung bzw. Befestigung des Absorptionsschalldämpfers 29 erfordert.

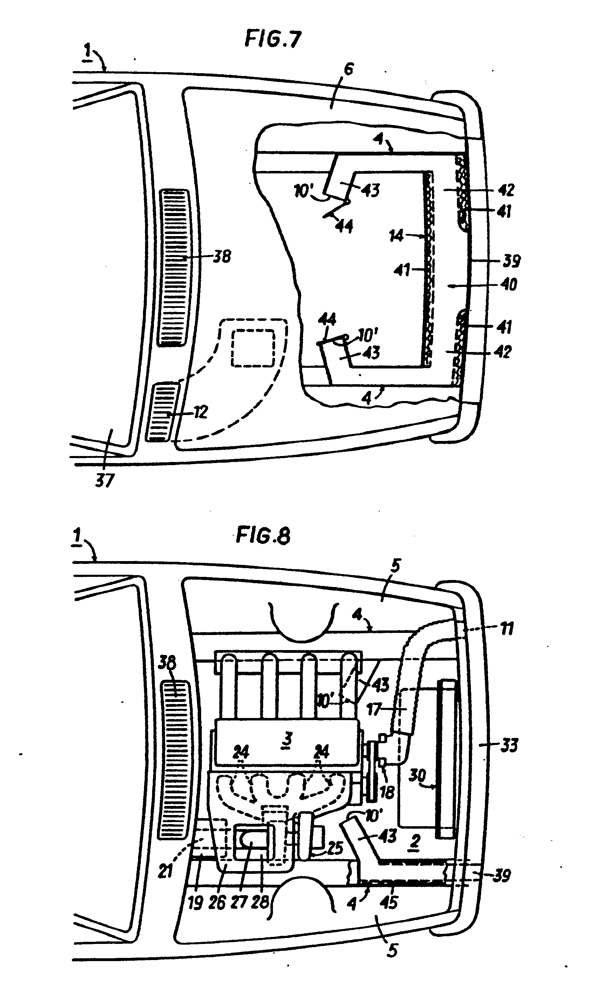

Andererseits ist nun der vordere Querträger 14 mit einer in Fahrtrichtung offenen Einlaßöffnung 39 versehen, und zu einem ansonsten im wesentlichen geschlossenen Einlaßgehäuse 40 ausgebildet. In diesem Einlaßgehäuse 40 ist eine schallabsorbierende Auskleidung 41 angebracht. Weiters ist das Einlaßgehäuse 40 über Öffnungen 42 mit den Rahmenlängsholmen 4 des Fahrzeuges 1 in Verbindung, womit die Längsholme 4 bei in Fahrt befindlichem Fahrzeug - also Wirkung des Staudruckes an der Einlaßöffnung 39 - Kühlluft zu den Zuleitungsöffnungen 10' führen. Diese Zuleitungsöffnungen 10' sind dabei an aus den Längsholmen 4 ausmündenden Stutzen 43 angebracht und - wie aus Fig. 7 ersichtlich - mit federbelasteten Klappen 44 versehen. Die Klappen 44 dienen dabei dazu, den Austritt von Kapselkühlluft über die Zuleitungsöffnungen 10' zu verhindern, was ansonsten bei einem den Kapselinnendruck unterschreitenden Staudruck möglich wäre.

Im übrigen sei zur Vermeidung von Wiederholungen auf die ausführliche Besprechung der in den Fig. 1 bis 4 dargestellten Ausführungsform verwiesen; gleiche Teile sind auch hier mit gleichen Bezugszeichen versehen. Der Deutlichkeit halber wurde in Fig. 7 auch die Brennkraftmaschine selbst nicht eingezeichnet.

Das Ausführungsbeispiel nach Fig. 8 entspricht im wesentlichen einer Kombination der beiden vorher besprochenen Ausführungsbeispiele. Die Abdeckung 26 des Auspuffsystems sowie die Anordnung der hier nicht dargestellten zugehörigen Ableitungsöffnung entspricht dem Ausführungsbeispiel nach den Fig. 1 bis 4; die vom Staudruck geförderte Zuführung von Kapselkühlluft über die Längsholme 4 bzw. aus den Längsholmen ausmündende Stutzen 43 zu den Zuleitungsöffnungen 10' entspricht der in den Fig. 5 bis 7 dargestellten Ausführung, wobei allerdings beim Ausführungsbeispiel nach Fig. 8 keine eigenen Rückschlagklappen an den Zuleitungsöffnungen 10' vorgesehen sind. Abweichend von der Darstellung in Fig. 7 ist hier auch, daß die Längsholme 4 mit einer schallabsorbierenden Auskleidung 45 versehen sind, was entweder zusätzlich zu der Anordnung des schallisolierten Einlaßgehäuses 40 (Fig. 7) oder an Stelle davon erfolgen kann.

Im übrigen gelten auch für das Ausführungsbeispiel nach Fig. 8 die obenstehenden Ausführungen; gleiche Teile sind auch hier wiederum mit gleichen Bezugszeichen versehen.

**Patentansprüche**

1. Kraftfahrzeug (1) mit einer zum Antrieb desselben dienenden, in einem Motorraum (2) angeordneten Brennkraftmaschine (3), wobei der Motorraum (2) durch zu sätzliche, gegenüber Rahmen- bzw. Karosserieteilen (4, 5, 6) abgedichtete Schalenteile (7, 8) zu einer schalldämmenden Kapsel (9) vervollständigt ist, welche schalldämpfende Zu- und Ableitungsöffnungen (10, 11, 12, 13) für die Kapselbelüftung aufweist, von denen zumindest eine (12) im Bereich der vom Auspuffsystem (22) der Brennkraftmaschine (3) aufsteigenden erhitzten Luft angeordnet ist, und mit einer innerhalb der Kapsel (9) angeordneten separaten Auspuffverschalung zusammenarbeitet, dadurch gekennzeichnet, daß die Auspuffverschalung als eine zumindest die zylinderkopfnahen Teile des Auspuffsystems (22) dachartig bedeckende, nach unten offene Abdeckung (26) ausgebildet ist und daß die zugehörige Ableitungsöffnung (12) unmittelbar an einer Außenwand des Fahrzeuges (1) angeordnet ist.

2. Kraftfahrzeug nach Anspruch 1, dadurch gekennzeichnet, daß die mit der Abdeckung (26) zusammenarbeitende Ableitungsöffnung (12) in einem bei in Fahrt befindlichem Fahrzeug (1) Unterdruck aufweisenden Bereich der Außenwand angeordnet ist.

3. Kraftfahrzeug nach Anspruch 1 oder 2, dadurch gekennzeichnet, daß die Abdeckung (26) an der Brennkraftmaschine (3) bzw. deren Auspuffsystem (22) befestigt ist und einen Auslaßstutzen (27) aufweist, der berührungslos und unter Freilassung eines im wesentlichen ringförmigen Spaltes (28) in einen an der Fshrzeugaußenwand, vorzugsweise an der aufklappbaren Motorhaube (6), angeordneten Absorptionsschalldämpfer (29) mündet, der mit der Ableitungsöffnung (12) in Verbindung steht.

**Claims**

1. A motor vehicle (1) which is powered by an internal combustion engine (3) mounted in an engine compartment (2), the latter being completed by additional encapsulating elements (7, 8) sealed against parts of the frame and body (4, 5, 6) to form a sound-insulating capsule (9) comprising sound-absorbing inlet and outlet openings (10, 11, 12, 13) for ventilation of said capsule, of which openings at least one (12) is located in the area where the heated air rises from the exhaust system (22) of the engine (3) and is cooperating with a separate exhaust casing mounted within said capsule (9), wherein said exhaust casing is configured as a roof-type cover (26) without a bottom, shielding at least those parts of the exhaust system (22) close to the cylinder head, and wherein the corresponding outlet opening (12) is positioned in an outer wall of the vehicle (1).

2. A motor vehicle according to claim 1, wherein said outlet opening (12) cooperating with said cover (26) is placed in an area of the outer wall in which a partial vacuum will develop once the vehicle is moving.

3. A motor vehicle according to claim 1 or 2, wherein said cover (26) is attached to said internal combustion engine (3) or its exhaust system (22), and is provided with an outlet fitting (27) which opens into an absorption muffler (29) without touching it, leaving open an essentially ringshaped gap (28), said muffler (29) being located at the outer wall of the vehicle, preferably at the hinged engine bonnet (6), and communicating with said outlet opening (12).

**Revendications**

1°) Véhicule automobile (1) avec un moteur à combustion interne (3) disposé dans un compartiment moteur (2) et servant à l'entraînement de ce véhicule, le compartiment moteur (2) étant complété par des parties d'enveloppe supplémentaires (7, 8) rendues étanches par rapport aux parties du châssis ou de la carrosserie (4, 5, 6), pour consituer une capsule insonorisante (9), qui comporte, pour la ventilation de la capsule, des orifices d'admission et d'évacuation amortissant le bruit (10, 11, 12, 13) dont un au moins (12) est disposé dans la zone de l'air échauffé montant du système d'échappement (22) du moteur à combustion interne (3), et coopère avec un coffrage de l'echappement, distinct, dispose à l'intérieur de la capsule (9), véhicule caractérisé en ce que le coffrage de l'echappement revêt la forme d'un capotage (26) ouvert vers le bas et recouvrant, à la façon d'un toit, au moins les parties voisines du système d'échappement (22) voisines de la culasse; et en ce que l'orifice d'évacuation (12) correspondant est disposé directement sur une paroi externe du véhicule (1).

2°) Véhicule automobile selon la revendication 1, caractérisé en ce que l'orifice d'évacuation (12) cooperant avec le capotage (26) est disposé dans une zone de la paroi externe où règne une dépression lorsque le véhicule (1) est en déplacement.

3°) Véhicule automobile selon l'une des revendications 1 ou 2, caractérisé en ce que le capotage (26) est fixé au moteur à combustion interne (3) ou à son système d'échappement (22) et comporte une tubulure d'évacuation (27) qui débouche, sans contact et en laissant libre une fente sensiblement annulaire (28), dans un amortisseur de son à absorption qui est disposé contre la paroi externe du véhicule, de préférence contre le capot rabattable (6) du moteur, et qui est en communication avec l'orifice d'évacuation (12).

FIG.1

FIG.2

**FIG.3**

**FIG.4**

**FIG.5**

**FIG.6**

**FIG.7**

**FIG.8**